Europäisches Patentamt

European Patent Office

Office européen des brevets

(11) Publication number:

**0 365 187**
**A2**

(12)

## EUROPEAN PATENT APPLICATION

(21) Application number: 89310270.7

(51) Int. Cl.5: **G06F 9/38**

(22) Date of filing: 06.10.89

(30) Priority: 18.10.88 US 259130

(43) Date of publication of application:
25.04.90 Bulletin 90/17

(84) Designated Contracting States:
AT BE CH DE ES FR GB GR IT LI LU NL SE

(71) Applicant: APOLLO COMPUTER INC.
330 Billerica Road
Chelmsford Massachusetts 01824(US)

(72) Inventor: Bahr, Richard G.
16 Soden Street 3
Cambridge Massachusetts 02139(US)
Inventor: Ciavaglia, Stephen J.
23 Macdonald Drive
Nashua New Hampshire 03062(US)
Inventor: Yates, John S., Jr.
19 Prospect Street
Needham Massachusetts 02192(US)
Inventor: Lauer, Hugh
69 Border Road
Concord Massachusetts 01742(US)
Inventor: Oppen, Peter
10 Sassafras Road
Westford Massachusetts 01824(US)

(74) Representative: Arthur, Bryan Edward et al
Withers & Rogers 4 Dyer's Buildings Holborn
London EC1N 2JT(GB)

(54) Apparatus for selective execution of instructions following a branch Instruction.

(57) Computer apparatus providing selective execution of instructions following a branch instruction wherein the branch is executed in response to condition codes determined in preceding instructions. The instructions following the branch instructions, called branch shadows, include the branch instruction itself has the bit fields which specify the disposition of the shadow(s) in response to the previously determined code. The branch shadow instructions if executed will do so prior to the fetching of the branch target destination instruction. The resulting apparatus embodying the present invention, in particular, pipelined central processing units, provide enhanced performance by permitting useful instructions to be selectively executed while permitting the processor to incorporate delayed branching techniques.

## FIELD OF THE INVENTION

The present invention relates to pipeline computer apparatus, in particular, pipeline computer apparatus incorporating delayed branching instructions.

## BACKGROUND OF THE INVENTION

All pipelined machines suffer performance loss upon sudden transfers, such as a conditional branch to a non-sequentially occurring memory location. Designers of reduced instructions set computers (RISC) have attempted to reduce the penalty incurred by such loss of control by having the transfer of control take effect only after one or more instructions of delay, commonly known as delayed branching. However, such instructions executed between the execution of the branch instruction and the execution of the branches target instruction, known as "branch shadow instructions" are currently in the instruction pipeline of the central processing unit (CPU). When faced with the possibility of a branch, the program compiler and corresponding computer hardware make it difficult to permit the branch shadow instruction to do useful work. As a result, frequently no operation instructions (NO-OPS) are used as branch shadows, reducing the efficiency of the programmed computer system.

## SUMMARY OF THE INVENTION

The apparatus according to the present invention includes a CPU and program compiler which executes the branch shadow instructions without imposing restrictions on the execution of either the stream of instructions if the branch is taken or the instructions executed as a result of an untaken branch. The apparatus and methods according to the present invention provide for a class of branch shadow instructions which are selectively responsive to the condition code on which the branch itself was determined. The selection is made according to the branch instruction. It is further contemplated in the present invention that such branch instructions may be selectively executed without regard to the condition code or if the branch is taken. The resulting hardware and compiled program instruction sequence provides a computing system with enhanced performance and increased flexibility of system programming.

The present invention further provides the conditional execution of any instruction within the instruction set by means of a one instruction preface. For example, "conditional trap" instructions from instruction primitives may be composed.

## BRIEF DESCRIPTION OF THE DRAWING

These and other features of the present invention will be better understood by reading the following the following detailed description, taken together with the drawing, wherein:

Fig. 1 is a flow chart of the operation of the apparatus according to one embodiment of the present invention; and

Fig. 2 is a block diagram of the central processing unit (CPU) according to one embodiment of the present invention.

## DETAILED DESCRIPTION OF THE INVENTION

A branch operation tests the condition codes set by a previous operation. If the condition tested by the branch operation is met, the program transfers control to the address formed by the branch operation. A CALL operation performs the same function as a branch operation but it stores the return program center (PC) in a register. If the condition tested by the branch operation is met, the program transfers control to the address of the destination operand of the branch operation. A branch operation consists of the following three parts:

1. A branch predicate (Bcc)
2. A shadow control modifier (shadow)
3. A branch destination (destination)

The branch predicates state the condition to be met before a branch is taken. There are two types of branch predicates; those based on the integer processor condition codes, and those based on the floating-point processor condition codes.

In one embodiment of the present invention, when using a branch predicate to test the result of an operation that set the integer processor condition codes (.ccs), there is a single instruction delay between the instruction that sets the condition codes and the first instruction that can test them. Therefore, the second instruction after the instruction that sets the condition codes is the first location where you can use a branch predicate to test those condition codes. An example is shown in List 1:

## LIST 1

```
zero    0.cc            = .2 - .1    ; operation that sets CCs
one     nop                          ; can't test codes in this
                                       slot because of cc pipeline
two     blt.shadow destination       ; test CCs set in operation
                                       at 'zero'
three   branch shadow operation
```

When using a branch predicate to test the result of an operation that sets the floating-point condition codes, there is no delay in setting the codes. So, you can test the condition codes in the operation that immediately follows the operation that sets them, although the branch may stall until the arithmetic operation completes.

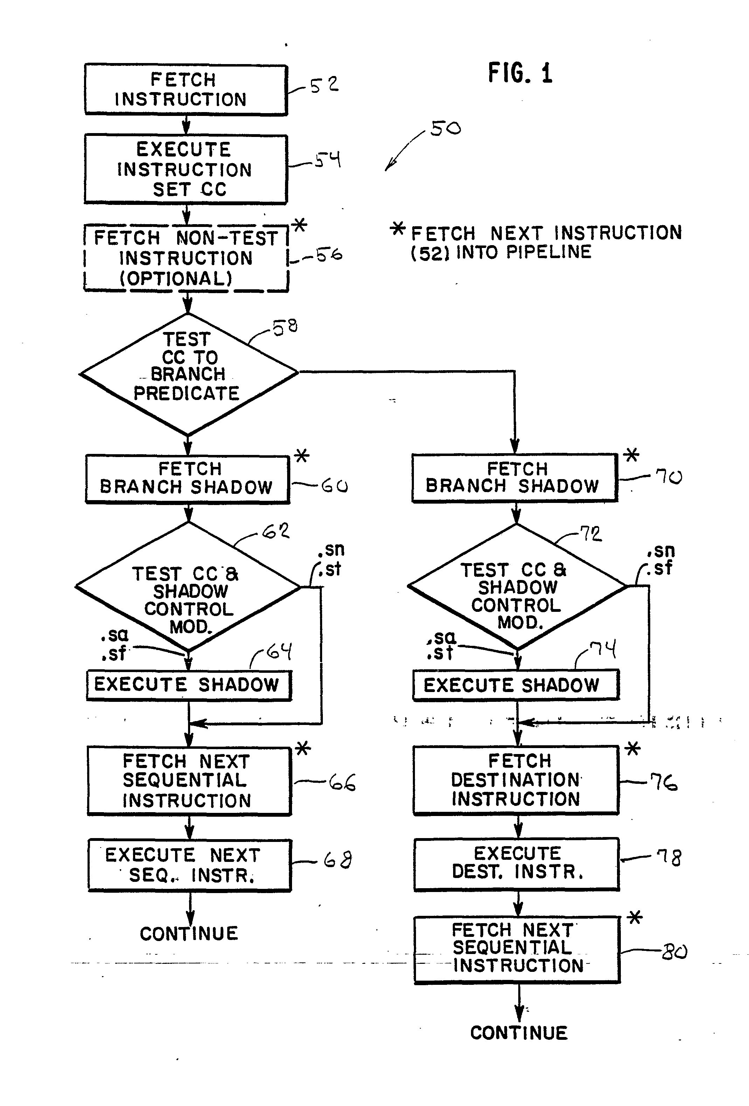

A flow chart 50 according to the process of the present invention is shown in Fig. 1, wherein the next instruction is fetched at 52 and executed at 54, wherein the condition codes (cc) are set in response to the result of the instruction execution. As discussed above, integer processor requires a subsequent instruction to intervene in the flow chart 50 of Fig. 1. The condition code is tested relative to the branch predicate, illustrated below in tables 1-3 at step 58. The next three steps of either branch from the test 58 relates to the execution of the branch shadow, and are substantially similar regardless of the result of the test at 58. At step 60, the branch shadow instruction is fetched and tested at step 62 according to the shadow control modifier bits included in the branch instruction. According to the condition code and the branch shadow control modifiers, listed in table 4 below, the shadow instruction is executed at step 64. The next sequential instruction is fetched at step 66 and executed at step 68. The subsequent program instructions continue to be fetched and executed thereafter.

If the branch is taken as a result of the test at 58, the branch shadow instruction is fetched at step 70, and a test of the condition code relative to the shadow control modifier of table 4 is made at step 72. Conditioned on the result of the test at 72 and the values of the condition code and shadow control modifiers, the shadow is executed at step 74. The destination instruction is then fetched at step 76 whether or not the shadow is executed, at step 74. The destination instruction is executed at step 78 and the next sequential instruction is fetched at step 80. The program continues to execute in sequence, thereafter. The preferred embodiment of the present invention envisions the process of Fig. 1 implemented in a pipeline processor. Accordingly, new instructions are continually loaded in the pipeline to be fetched and executed in sequence, in particular, according to the flow chart 50 of Fig. 1. The steps of the present invention where the next instruction is preferably loaded into the pipeline is indicated by an asterisk (*) adjacent to the steps of the flow chart 50. However, other embodiments may provide alternate instruction entry into the pipeline.

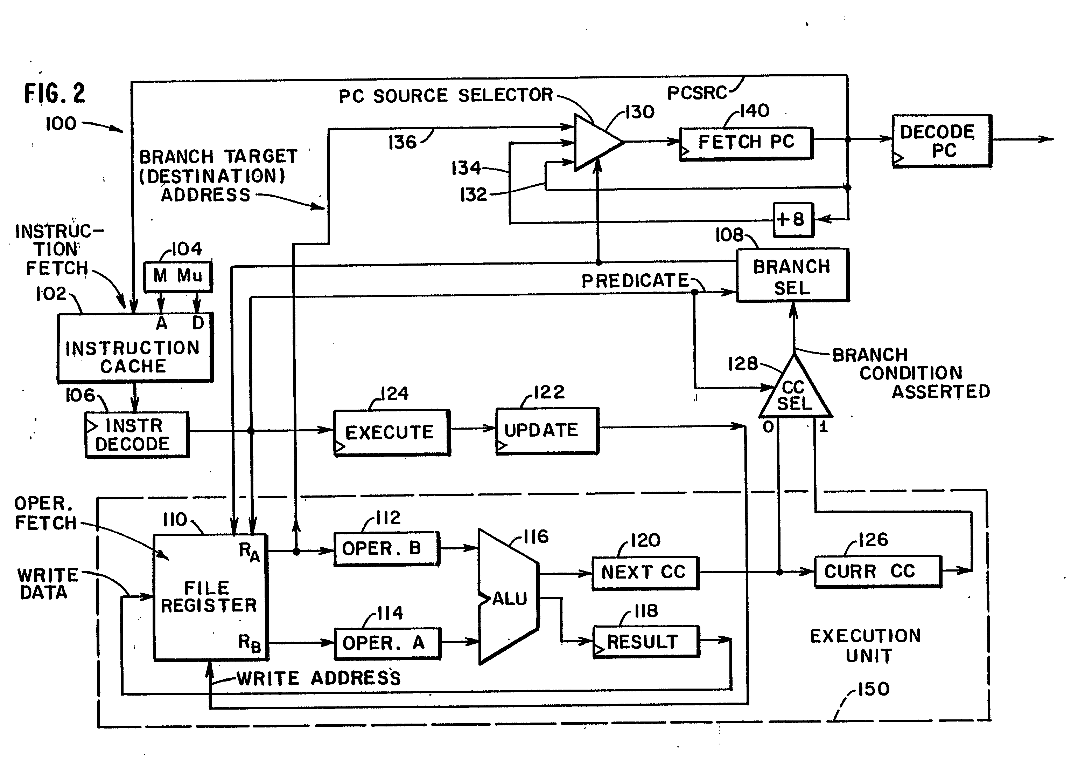

The hardware implementation of the present invention, including the process of Fig. 1 shown in the block diagram 100 of Fig. 2. In instruction cache 102, being loaded by a memory management unit 104 from instruction memory (not shown), is operable according to techniques known in the art. The instruction cache 102 fetches an instruction on lead 104 according to an instruction address provided by the program counter source bus (PCSRC). The signal is stored in register 106 where it is decoded by the branch select logic 108 and the operand fetch logic of the filed register 110 part of the execution unit 150. The file register 110 provides an A and B operand in registers 112 and 114, wherein the signals stored therein are received by an arithmetic logic unit (ALU 116). The ALU provides a result, stored in result register 118 and the above discussed condition code signals (cc) which is stored in register 120. The result, called write data, is stored in the file register 110 according to a write address signal provided by the update register 122. Since the instruction may specify the location in which the result is to be written, and in view of the pipeline structure of the embodiment of the present invention shown, the instruction is propagated through the pipeline synchronously with the generation and flow of signals within the execution unit by sequential storage of the instruction from the instruction decode register 106, the execute register 124 (corresponding with the generation of the operand and ALU signals) and the update register 122. The condition code is also propagated in a pipeline comprising next condition code register 120 and current condition code register 126, wherein the condition code signal is selectively provided by multiplexer 128 according to a signal provided in the instruction word. The selection of a condition code is further discussed in copending patent application APOLL-107XX, entitled CENTRAL PROCESSOR CONDITION CODE METHOD AND APPARATUS, filed concurrently herewith and incorporated by reference. The resulting selected condition code is received by the branch select logic 108, which is compared to the branch predicate signals, as illustrated in step 58 of Fig. 1. The value of the program counter is provided according to a selection of a particular signal by the PC source multiplexer 130, wherein such program counter values include the previous counter program value as may be provided on lead 132, the next sequential instruction (PC + 8) provided on lead 134 and the branch destination address signal on lead 136 as may be selected according to the result of the branch select logic 108. Other PC signal sources include trap and PC + Displacement, not shown. The signal provided by the PC source selector 130 is stored in the fetch PC register 140, to provide the PC SRC signal to the instruction cache 102. As a result of the pipeline structure, the branch shadow instruction is loaded into the instruction decode register 106 while the instruction cache 102 is providing the next instruction. The shadow control modifier, included in the instruction now stored in the instruction decode register 106 is received by the file register 110 of the execution unit, together with a signal from the branch select logic 108, wherein the test indicated in steps 62 and 72 of Fig. 1 is performed to determine whether or not to execute the shadow. The taken branch will be subsequently received by the file register 110, wherein the execution of the instructions follows accordingly.

Tables 1, 2 and 3 below, lists all the branch predicates that you can use to test the integer and floating-point condition codes.

## Table 1

### Branch Predicates Tested Against the Integer Processor Condition Codes

| Condition Codes * | Predicate | Branch Condition |
|---|---|---|
| | BNEVER | never |
| | B | always |
| $\overline{(Z \mid N \wedge V)}$ | BGT | greater than |
| $Z \mid N \wedge V$ | BLE | less than or equal |
| $\overline{N \wedge V}$ | BGE | greater or equal |
| $N \wedge V$ | BLT | less than |
| $C \& \overline{Z}$ | BHI | higher than |
| $\overline{C} \mid Z$ | BLS | lower or same |
| $\overline{C}$ | BNC | no carry |
| | BLO | lower than |
| $C$ | BC | carry |
| | BHS | higher or same |
| $\overline{N}$ | BNN | not negative |
| | BNE | not equal |
| $N$ | BN | negative |
| | BEQ | equal |
| $\overline{Z}$ | BNZ | not zero |
| $Z$ | BZ | zero |
| $\overline{V}$ | BNV | no overflow |
| $V$ | BV | overflow |
| $L_2 \mid V$ | BL2V | non-integer or bignum |
| $\overline{L_2 \mid V}$ | BNL2V | integer operation OK |
| $L_2$ | BL2 | non-integer operands |
| $\overline{L_2}$ | BNL2 | integer operands |
| $Z_3$ | BZ3 | tag match |
| $\overline{Z_3}$ | BNZ3 | tag mismatch |
| $B$ | BB | branch target |
| * \| represents a logical OR; ^ represents a logical exclusive OR; & represents a logical AND; ‾ represents NOT | | |

## Table 2

### Branch Predicates Tested Against the Floating-Point Processor Condition Codes

| aware predicates — these tests *do not* set the BRUN bit if the NAN condition code is set. | | |
|---|---|---|
| **Condition Codes** | **Predicate** | **Branch Condition** |
| all bits = 0 | BGTA | Graphic Trivial Accept |
| any Pn * Qn = 1 | BGTR | Graphic Trivial Reject |
| Z | BFEQ | Equal |
| Z̄ | BFNE | Not Equal |
| N̄ \| NaN \| Z | BFOGT | Ordered Greater Than |
| N \| NaN \| Z | BFULE | Unordered or Less or Equal |
| N̄ \| NaN̄ \| Z | BFOGE | Ordered Greater Than or Equal |
| ( N \| Nan ) * Z̄ | BFULT | Unordered or Less Than |
| N * NaN̄ \| Z | BFOLT | Ordered Less Than |
| N̄ \| NaN \| Z | BFUGE | Unordered or Greater or Equal |
| N * NaN̄ \| Z | BFOLE | Ordered Less Than or Equal |
| ( N̄ \| NaN ) * Z̄ | BFUGT | Unordered or Greater Than |
| NaN̄ \| Z | BFOGL | Ordered Greater or Less Than |
| NaN \| Z | BFUEQ | Unordered or Equal |
| NaN̄ | BFOR | Ordered |
| NaN | BFUN | Unordered |
| Z \| I \| NaN̄ | BFNORM | Class — Normalized |
| Z * I * NaN̄ | BFDEN | Class — Denormalized |
| I * Z̄ \| NaN | BFINF | Class — Infinity |
| N | BFNEG | Class — Negative |
| * \| represents a logical OR; ^ represents a logical exclusive OR; & represents a logical AND; ~ represents NOT | | |

## Table 3

### Branch Predicates Tested Against the Floating-Point Processor Condition Codes

| non-aware predicates — these tests *do* set the BRUN bit if the NAN condition code is set. | | |
|---|---|---|
| **Condition Codes\*** | **Predicate** | **Branch Condition** |
| $\overline{N}$ \| NaN \| $\overline{Z}$ | **BFGT** | Greater than |
| N \| NaN \| Z | **BFNGT** | Not Greater than |
| $\overline{N}$ \| NaN \| Z | **BFGE** | Greater than or Equal |
| ( N \| NaN ) \* $\overline{Z}$ | **BFNGE** | Not (Greater than or Equal) |
| N \* $\overline{NaN}$ \| $\overline{Z}$ | **BFLT** | Less Than |
| $\overline{N}$ \| NaN \| Z | **BFNLT** | Not Less Than |
| N \* $\overline{NaN}$ \| Z | **BFLE** | Less than or Equal |
| ( $\overline{N}$ \| NaN ) \* $\overline{Z}$ | **BFNLE** | Not (Less than or Equal) |
| $\overline{NaN}$ \| $\overline{Z}$ | **BFGL** | Greater or Less than |
| NaN \| Z | **BFNGL** | Not (Greater or Less than) |
| $\overline{NaN}$ | **BFGLE** | Greater or Less or Equal |
| NaN | **BFNGLE** | Not (Greater or Less or Equal) |
| \* \| represents a logical OR; \* represents a logical exclusive OR; & represents a logical AND; $^-$ represents NOT | | |

The instruction that follows the branch is the branch shadow operation and is always fetched before the destination instruction is fetched. Whether or not the branch shadow instruction executes depends on a shadow control modifier. The shadow control modifier is a suffix appended to the branch predicate that tells the hardware when it should execute the branch shadow instruction. There are four shadow control modifiers that state the following information, as shown in Table 4, below:

Table 4

| .sa | always execute the branch shadow instruction |
|---|---|
| .sn | never execute the branch shadow instruction |
| .st | execute the branch shadow operation if the condition tested is true and the branch is taken |
| .sf | execute the branch shadow instruction if the condition tested is false and execution falls through sequentially |

The Modifier .sf corresponds to conventional (that is, 68000) branch behavior. Consider the segment of code of List 2:

## List 2

```
          . . .
A         Bcc.shadow d              ; this is any branch with
                                      destination of D

B         branch shadow instruction

C         the next sequential instruction
          . . .

D         the branch destination
          . . .
```

The trace of instruction execution for this program segment depends on two variables: the shadow control modifier, and whether or not the branch condition is met. Table 5 below traces the execution of the code segment depending on these two variables. the hyphen ("-") that appears in the table indicates a single-cycle stall between the execution of the instructions listed. For example, A-D does not mean execute instructions A through D. Rather, it means instruction A executed followed by a stall, then instruction D executes.

## Table 5

### The Branch Shadow Control Modifier Truth Table

| Shadow Control Modifier / Condition Result | .sa | .sn | .st | .sf |
|---|---|---|---|---|
| Condition true—branch taken | ABD | A-D | ABD | A-D |
| Condition false—fall through | ABC | A-C | A-C | ABC |

The destination of a branch operation can be either an address contained in an integer register or a PC relative expression.

Similarly, a CALL operation loads a target address into the program counter (PC), so that the next instruction executed is the one at the target address rather than the one that is physically next in memory. A CALL operation performs the same function as a branch operation but it additionally stores the return PC in a register.

Like BRANCH, the instruction following the CALL is always fetched before control is transferred to the destination. The shadow control modifier determines whether this shadow instruction is executed. The shadow control modifier for a CALL operation can be .sa and .sn, as listed in Table 4, above. The destination of the CALL operation can be an address contained in an integer register or a PC-relative expression. An example of a CALL operation is shown in List 3.

## List 3

```
        .
        .
        .
        .0      = ac_start          ; address of routine to call
        .22     = call .sn [.0]     ; call the routine
        nop                         ; shadow instruction
ac_start data    start
start    procedure ok               ; entry point for procedure
        ; routine body
        b.sn    [.22]               ; return to caller
        nop                         ; branch shadow
        .
        .
        .
```

The present invention is operable with concurrently dispatched instruction processors as discussed in copending patent application APOLL-105XX, entitled METHOD AND APPARATUS FOR CONCURRENT DISPATCH OF INSTRUCTIONS TO MULTIPLE FUNCTIONAL UNITS, filed October 7, 1988, incorporated by reference. When executing the instructions, the floating point unit is informed of branch shadow state via the Integer Processor (IP) signal IP NOP. IP_NOP when asserted informs the FPU to dispatch a nop for the instruction resident in its IR'S.

According to one embodiment of the present invention, all fetch related exceptions/stalls regarding the shadow are taken prior to attempting to dispatch the shadow. Specifically, a Memory Management Unit (MMU) fetch exception on the branch shadow will be serviced even through the shadow is not to be executed. A reservation table, Table 6, indicating pipeline action is as follows:

Table 6

| Branch Shadow Reservation | | | |
|---|---|---|---|
| Resource | Cycle → | | |
| PCSRC | i + 1 | target | |
| IF | i | i + 1 | target |
| OF | | i | i + 1 |
| EX | | | | i + 1 |
| DC | | | |
| WL | | | |
| WE | | | |
| i = Branch | | | |
| i + 1 = Branch Shadow | | | |
| Target = Branch Target | | | |

In Addition to the BRANCH operations described in the previous section, the present invention provides privileged branch operations that are used to effect trap returns and to enable or disable traps. These operations are normal BRANCH operations with trap control since effects.

The privileged BRANCH operation can use any of the BRANCH predicates listed in Tables 2 and 3. The shadow control modifier is always .sa. This means that the BRANCH shadow instruction always executed.

The available variations of the privileged BRANCH operation are: Disable sets the integer processor status word's (IPSW) in trap bit at the end of the decode phase of the operation. While "in trap" is set, interrupts are inhibited. Enable clears the integer processor status word's (IPSW) in trap bit at the end of the decode phase of the operation. No_trap inhibits an asynchronous fetch trap from occurring in the decode phase of the operation. Reissue (RB) uses the contents of RB as an address and issues a memory request. The attributes of the memory request are derived from the trap stat queue.

Substitutions and modifications made by one of ordinary skill in the art are within the scope of the present invention. For instance, the addition of intervening steps within the process according to the present invention and the addition of registers in the instruction pipeline as illustrated in the structure according to the present invention is within the scope of the present invention. Furthermore, modification to the format of the instructions or codes described herein to provide the selective execution of branch shadow instructions is also considered to be within the scope of the present invention, which is not to be limited except by the claims which follow.

## Claims

1. A method of efficiently processing a conditional manipulation of data in a pipelined processor, comprising the steps of:
providing a first instruction type establishing a condition code having at least a true and a false state as a result of execution of said first instruction;
providing a second instruction type subsequent to said first instruction selectably providing an execution branch to a destination instruction as a result of said condition code; and
providing a third instruction type subsequent to said second instruction and being fetched by the execution unit of said processor before the destination instruction address is fetched, wherein
said second instruction type further includes a control suffix appended thereto, and
said third instruction type being selectively executed according to said control suffix and said condition code.

2. The method of claim 1, wherein
said step of providing a second instruction type includes providing a branch predicate; and
said step of providing a third instruction type includes providing a branch shadow, wherein
said condition code comprises at least one of the steps of:
always executing said third instruction,
never executing said third instruction,
executing said third instruction conditioned on a true condition code and said second instruction executing said branch instruction, and
executing said third instruction conditioned on a false condition code and a second instruction failure to execute a branch.

3. The method of claim 1 further including the step of
providing a fourth instruction type intervening said first and said second instruction types comprising a number of instructions corresponding to the latency required by the second instruction type to respond to the state of the condition codes as set by said first instruction type.

4. The method of claim 3, wherein
said fourth instruction type includes at least one no-operation instruction.

5. A computer execution unit, comprising:
means for executing an instruction of a first instruction type establishing a condition code having at least a true and a false state as a result of the execution of an instruction of said first instruction type;
means for executing an instruction of a second instruction type subsequent to said first instruction providing an execution branch to a destination instruction as a result of the state of said condition code; and
means for executing an instruction of a third instruction type subsequent to said second instruction and being fetched before the destination instruction address is fetched, wherein
said means for executing a third instruction type is responsive to a control suffix included in said second instruction, and
said means for executing a third instruction type is operable according to said control suffix and said condition code.

**FIG. 1**

FETCH INSTRUCTION — 52

EXECUTE INSTRUCTION SET CC — 54

FETCH NON-TEST INSTRUCTION (OPTIONAL) * — 56

* FETCH NEXT INSTRUCTION (52) INTO PIPELINE

TEST CC TO BRANCH PREDICATE — 58

FETCH BRANCH SHADOW * — 60

TEST CC & SHADOW CONTROL MOD. — 62
.sn .st
.sa .sf

EXECUTE SHADOW — 64

FETCH NEXT SEQUENTIAL INSTRUCTION * — 66

EXECUTE NEXT SEQ. INSTR. — 68

CONTINUE

FETCH BRANCH SHADOW * — 70

TEST CC & SHADOW CONTROL MOD. — 72
.sn .sf
.sa .st

EXECUTE SHADOW — 74

FETCH DESTINATION INSTRUCTION * — 76

EXECUTE DEST. INSTR. — 78

FETCH NEXT SEQUENTIAL INSTRUCTION * — 80

CONTINUE

50

FIG. 2

100

EP 0 365 187 A2